# EUROPÄISCHE PATENTSCHRIFT

(11) **EP 1 198 021 B1**
(45) Veröffentlichungstag und Bekanntmachung des Hinweises auf die Patenterteilung: **29.04.2015**
(21) Anmeldenummer: 01123514.0
(22) Anmeldetag: 29.09.2001
(51) Int. Cl.: H01M 8/10, H01M 4/88

(54) **Verfahren zur Herstellung einer Membran-Elektrodeneinheit für Brennstoffzellen**
Method for manufacturing a membrane electrode unit for fuel cells
Procédé de fabrication d'une unité membrane-électrodes pour piles à combustible

(30) Priorität: 12.10.2000 DE 10050467
(43) Veröffentlichungstag der Anmeldung: 17.04.2002
(73) Patentinhaber: Umicore AG & Co. KG, 63457 Hanau-Wolfgang (DE)
(72) Erfinder: Köhler, Joachim, Dr., 63486 Bruchköbel (DE); Wittpahl, Sandra, 63179 Obertshausen (DE); Starz, Karl-Anton, Dr., 63517 Rodenbach (DE); Diehl, Manfred, Dr., 60389 Frankfurt (DE)
(74) Vertreter: Vossius & Partner Patentanwälte Rechtsanwälte mbB

(56) Entgegenhaltungen:
- EP-A1- 1 037 295
- WO-A-97/23916
- DE-A1- 19 837 669
- JP-A- 7 176 317

## Beschreibung

Die Erfindung betrifft ein Verfahren zur Herstellung einer Membran-Elektrodeneinheit (MEA) für Brennstoffzellen, welches sich insbesondere auch für die kontinuierliche Fertigung der Membran-Elektrodeneinheit eignet.

Eine Membran-Elektrodeneinheit besteht aus einer Polymerelektrolyt-Membran, welche auf beiden Seiten mit jeweils einer Katalysatorschicht und einer auf der Katalysatorschicht liegenden Gasverteilerschicht versehen ist. Eine der Katalysatorschichten ist als Anode für die Oxidation von Wasserstoff und die zweite Katalysatorschicht als Kathode für die Reduktion von Sauerstoff ausgebildet. Die Gasverteilerschichten bestehen gewöhnlich aus Kohlefaserpapier oder Kohlefasergewebe und ermöglichen einen guten Zugang der Reaktionsgase zu den Reaktionsschichten und eine gute Ableitung des Zellenstroms. Die Katalysatorschichten für Anode und Kathode enthalten ein Protonen leitendes Polymer und sogenannte Elektrokatalysatoren, die die jeweilige Reaktion (Oxidation von Wasserstoff beziehungsweise Reduktion von Sauerstoff) katalytisch unterstützen. Als katalytisch aktive Komponenten werden bevorzugt die Metalle der Platingruppe des Periodensystems der Elemente eingesetzt. In der Mehrzahl werden sogenannte Trägerkatalysatoren verwendet, bei denen die katalytisch aktiven Platingruppenmetalle in hochdisperser Form auf die Oberfläche eines leitfähigen Trägermaterials aufgebracht wurden. Als Trägermaterialien haben sich feinteilige Ruße bewährt.

Die Polymerelektrolyt-Membran besteht aus Protonen leitenden Polymermaterialien. Diese Materialien werden im folgenden auch kurz als Ionomere bezeichnet. Bevorzugt wird Tetrafluorethylen-Fluorvinylether-Copolymer mit Sulfonsäuregruppen verwendet. Dieses Material wird zum Beispiel unter dem Handelsnamen Nafion® von DuPont vertrieben. Es sind jedoch auch andere, insbesondere fluorfreie Ionomermaterialien, wie sulfonierte Polyetherketone oder Arylketone oder Polybenzimidazole einsetzbar. Für die Verwendung in Brennstoffzellen weisen diese Membranen im allgemeinen eine Dicke zwischen 10 und 200 µm auf.

Die Katalysatorschichten werden zumeist unter Verwendung einer pastenförmigen Zubereitung durch Drucken, Rakeln, Rollen oder Sprühen auf die Polymerelektrolyt-Membranen aufgebracht. Die pastenförmigen Zubereitungen werden im folgenden als Tinten oder Katalysatortinten bezeichnet. Sie enthalten neben dem Trägerkatalysator in der Regel ein lösliches, protonenleitendes Material, mehrere Lösungsmittel und gegebenenfalls hochdisperse, hydrophobe Materialien und Porenbildner. Die Katalysatortinten lassen sich nach der Art der verwendeten Lösungsmittel unterscheiden. Es gibt Tinten, die überwiegend organische Lösungsmittel enthalten und solche, die überwiegend Wasser als Lösungsmittel einsetzen. So beschreibt die DE 196 11 510 A1 Katalysatortinten, die überwiegend organische Lösungsmittel enthalten, während die EP 0 731 520 A1 Katalysatortinten beschreibt, bei denen ausschließlich Wasser als Lösungsmittel eingesetzt wird.

Die Gasverteilerschichten bestehen gewöhnlich aus grobporigem Kohlefaserpapier oder Kohlefasergewebe mit Porositäten bis zu 90%. Um das Fluten des Porensystems mit dem an der Kathode entstehenden Reaktionswasser zu verhindern, werden diese Materialien mit hydrophoben Materialien imprägniert, zum Beispiel mit Dispersionen von Polytetrafluorethylen (PTFE). An die Imprägnierung schließt sich eine Calcinierung bei etwa 340 bis 370 °C an, um das PTFE-Material aufzuschmelzen. Zur Verbesserung des elektrischen Kontaktes zwischen den Katalysatorschichten und den Gasverteilerschichten werden diese häufig auf der der jeweiligen Katalysatorschicht zugewandten Seite mit einer sogenannten Ausgleichsschicht aus Ruß und einem Fluorpolymer beschichtet, die porös und wasserabstoßend und zugleich elektrisch leitend ist und außerdem eine einigermaßen glatte Oberfläche besitzt.

Zur Nutzung von Brennstoffzellen als elektrische Energiequelle werden viele Membran-Elektrodeneinheiten zur Bildung eines Brennstoffzellenstapels übereinander angeordnet. Zwischen den einzelnen Membran-Elektrodeneinheiten werden sogenannte Bipolarplatten eingefügt, die über entsprechende Kanäle die Reaktionsgase an die Elektroden der Brennstoffzellen heranführen und die entstehenden Reaktionsprodukte abführen. Außerdem übernehmen sie die Zu- und Ableitung des Zellenstroms.

Die Verwendung dieser Brennstoffzellenstapel für den elektrischen Antrieb von Kraftfahrzeugen erfordert großtechnische Produktionsverfahren für die Membran-Elektrodeneinheiten.

In der DE 195 09 749 A1 wird ein Verfahren zur kontinuierlichen Herstellung eines Verbundes aus Elektrodenmaterial, Katalysatormaterial und einer Festelektrolytmembran beschrieben, wobei aus einem das Elektrodenmaterial, das Katalysatormaterial und das Festelektrolytmaterial umfassenden katalytischen Pulver eine katalytische Schicht auf einem Träger hergestellt wird. Diese katalytische Schicht wird auf einer dem Träger abgewandten Seite zum Erweichen des Festelektrolytmaterials aufgeheizt und unter Druck auf die Festelektrolytmembran aufgewalzt. Dieser Vorgang wird für beide Seiten der Festelektrolytmembran vorgenommen, so daß das Verfahren eine komplette Membran-Elektrodeneinheit liefert. Der Träger für die katalytische Schicht dient in der fertigen Membran-Elektrodeneinheit als Gasverteilerschicht.

In der WO 97/50142 wird ein kontinuierliches Verfahren zur Beschichtung einer Polymerelektrolyt-Membran mit Elektroden beschrieben, bei dem eine bandförmige polymere Membran durch ein Bad mit Platinsalzlösung gezogen wird. Das anhaftende Salz wird anschließend in einem Gasstrom oder in einem weiteren Bad zum Edelmetall reduziert. Dieses Verfahren liefert keine kompletten Membran-Elektrodeneinheiten.

In der WO 97/23916 wird ebenfalls ein Verfahren zur kontinuierlichen Herstellung von Materialverbunden beschrieben, wobei die Materialverbunde aus mehreren Funktionsmaterialien bestehen. Sie können zum Beispiel in Brennstoffzellen eingesetzt werden. Zur Herstellung der Katalysatorschichten können unter anderem fluide Zubereitungen, die katalytisches Material enthalten (Katalysatortinten), eingesetzt werden.

Weiterhin wird in der WO 97/23919 ein Verfahren zur Herstellung von Membran-Elektrodeneinheiten beschrieben, wobei das Verbinden der Polymerelektrolyt-Membran, der Elektrodenschichten und der Gasdiffusionsschichten kontinuierlich in einem Walzverfahren durchgeführt wird.

Die US 6,074,692 beschreibt ebenfalls ein kontinuierliches Verfahren zur Beschichtung einer Polymerelektrolyt-Membran auf beiden Seiten gleichzeitig mit Katalysatorschichten unter Verwendung entsprechender Katalysatortinten, jedoch ohne Aufbringen von Gasverteilerschichten.

JP 07-176317 A beschreibt ein Verfahren zur Herstellung einer Membran-Elektrodeneinheit, bei der eine katalysatorbeschichtete Membran aus zwei Halb-Membranelektroden-Einheiten hergestellt wird. Die Gasverteilerschichten werden in der Brennstoffzelle hinzugefügt, so dass eine fünflägige MEA entsteht.

In der DE 198 37 669 A1 wird eine Katalysatorschicht für Polymer-Elektrolyt-Brennstoffzellen offenbart, wobei die Katalysatorschicht ein protonenleitendes Polymer (Ionomer), elektrisch leitfähige Kohlenstoffpartikel und feinteilige Partikel mindestens eines Edelmetalls enthält.

Die EP 1 037 295 A1 beschreibt ein Verfahren zum Aufbringen von Elektrodenschichten auf eine bandförmige Polymerelektrolytmembran in einem gewünschten Muster, wobei Vorder-und Rückseite der Membran kontinuierlich im gewünschten Muster mit den Elektrodenschichten unter Verwendung einer einen Elektrokatalysator enthaltenden Tinte gedruckt und die aufgedruckten Elektrodenschichten unmittelbar nach dem Druckvorgang bei erhöhter Temperatur getrocknet werden.

Die elektrochemische Leistung von Membran-Elektrodeneinheiten hängt unter anderem von der Dicke der Polymerelektrolyt-Membran ab. Je dünner die Membran ist, um so geringer ist ihr elektrischer Widerstand. Zur Zeit werden Membranen mit Dicken von 50 und 100 µm für Membran-Elektrodeneinheiten verwendet. Da die Membranen mit geringer werdender Dicke sich immer schwerer handhaben lassen, werden sie teilweise mit einer einseitigen Trägerfolie ausgeliefert.

Aufgabe der vorliegenden Erfindung ist es, ein sicheres Verfahren anzugeben, mit welchem sich Polymerelektrolyt-Membranen insbesondere mit Dicken unter 50 µm zu Membran-Elektrodeneinheiten verarbeiten lassen.

Diese Aufgabe wird gelöst durch ein Verfahren gemäß Patentanspruch 1 zur Herstellung einer Membran-Elektrodeneinheit für Brennstoffzellen enthaltend eine Polymerelektrolyt-Membran, welche auf einer ersten Seite mit einer ersten Katalysatorschicht und einer ersten hydrophobierten Gasverteilerschicht und auf der zweiten Seite mit einer zweiten Katalysatorschicht und einer zweiten hydrophobierten Gasverteilerschicht einen festen Verbund bildet, wobei für die Herstellung der Katalysatorschichten Tinten eingesetzt werden, die den jeweiligen Elektrokatalysator, ein oder mehrere Lösungsmittel, ein Protonen leitendes Ionomer und gegebenenfalls Hydrophobierungsmittel und Porenbildner enthalten. Das Verfahren ist dadurch gekennzeichnet, daß die beiden Katalysatorschichten nacheinander auf die Polymerelektrolyt-Membran aufgebracht oder mit ihr in Kontakt gebracht werden, wobei während des Aufbringens oder Inkontaktbringens die jeweils gegenüberliegende Seite der Membran gestützt wird.

Das Verfahren befaßt sich mit der Herstellung von Membran-Elektrodeneinheiten aus einer Polymerelektrolyt-Membran und beidseitig aufgebrachten Elektroden. Die Polymerelektrolyt-Membran wird im folgenden auch kurz als Membran bezeichnet. Die Membran besteht aus einem Protonen leitenden Ionomer und weist eine bestimmte Dikke auf. Sie wird im wesentlichen von zwei gegenüberliegenden Flächen begrenzt, auf die die Elektroden der Membran-Elektrodeneinheit aufgebracht werden. Die zwei gegenüberliegenden Flächen der Membran werden im Rahmen dieser Erfindung als erste und zweite Seite der Membran bezeichnet. Die Elektroden der Membran-Elektrodeneinheit enthalten eine Katalysatorschicht und eine sogenannte Gasverteilerschicht aus einem hochporösen, elektrischen leitendem Kohlefasergewebe oder Kohlefaserpapier. Die Dicke dieser Gasverteilerschicht beträgt gewöhnlich zwischen 100 und 400 µm. Die Gasverteilerschichten werden hydrophobiert, um ein Fluten der Poren mit dem Befeuchtungswasser für die Anode und dem Reaktionswasser an der Kathode zu verhindern und somit stets eine gute Zu- und Abführung der Reaktionsmedien zu den Katalysatorschichten zu gewährleisten. Die Hydrophobierung erfolgt durch Imprägnieren mit einer PTFE-Dispersion (zum Beispiel Hostaflon TF5235 von Dyneon), Trocknen und Calcinieren bei Temperaturen oberhalb von 340 °C.

Die Elektroden auf den beiden Seiten der Membran können voneinander verschieden sein. Sie können sowohl unterschiedliche Katalysatorschichten als auch unterschiedliche Gasverteilerschichten enthalten. Deshalb werden im Rahmen dieser Erfindung erste und zweite Katalysatorschicht und erste und zweite Gasverteilerschicht voneinander unterschieden. So enthält die Anoden-Gasverteilerschicht vorteilhafter Weise eine höhere Konzentration an PTFE als die Kathoden-Gasverteilerschicht. Bevorzugt ist die Konzentration des PTFE in der Anoden-Gasverteilerschicht etwa doppelt so hoch wie in der Kathoden-Gasverteilerschicht. Typische Kozentrationswerte des PTFE für die Anoden-Gasverteilerschicht sind 16 Gew.-% und für die Kathoden-Gasverteilerschicht 8 Gew.-%.

Die Katalysatorschichten sind porös und bestehen aus dem jeweiligen Elektrokatalysator, im allgemeinen ein Edelmetall-Trägerkatalysator wie Platin auf Ruß (Pt/C) für die Kathode und Platin und Ruthenium auf Ruß (PtRu/C) für die Anode, und einem Protonen leitenden Ionomer. Statt oder in Kombination mit einem Edelmetall-Trägerkatalysator kann auch ein Edelmetall-Mohr verwendet werden. Zur Herstellung der Katalysatorschichten werden der Elektrokatalysator und das Ionomer unter Verwendung von Lösungsmitteln sorgfältig zu einer Paste vermischt. Diese Paste wird im folgenden als Tinte bezeichnet. Die Katalysatortinte kann darüber hinaus noch Porenbildner und Hydrophobierungsmittel, wie zum Beispiel eine PTFE-Dispersion, enthalten. Im Rahmen der vorliegenden Erfindung wird zwischen Tinten unterschieden, die vorwiegend, das heißt zu mehr als 50 Gew.-%, bezogen auf das Gesamtgewicht der Tinte, organische Lösungsmittel enthalten und solchen Tinten, die vorwiegend Wasser enthalten. Tinten, die überwiegend organische Lösungsmittel enthalten werden zum Beispiel in den deutschen Patentanmeldungen DE 196 11 510 A1 und DE 198 10 485 A1 und DE 198 37 669 A1 beschrieben. "Wässrige" Tinten werden in der EP 0 731 520 A1 und in der noch nicht veröffentlichten deutschen Patentanmeldung P 100 37 074.8 offenbart.

Die Katalysatorschichten können unter Verwendung der Tinten durch Drucken, Pinseln, Sprühen oder andere bekannte Beschichtungstechniken direkt auf die Membran aufgebracht werden. In diesem Fall wird im Rahmen dieser Erfindung von einer Beschichtung der Membran gesprochen. Danach werden die Gasverteilerschichten mit den Katalysatorschichten in Kontakt gebracht. Alternativ hierzu können die Katalysatorschichten auch auf die Gasverteilerschichten aufgebracht werden und diese anschließend mit der Katalysatorschicht auf die Membran aufgelegt werden. In diesem Fall wird im folgendem vom Inkontaktbringen der Katalysatorschicht mit der Membran gesprochen.

Wesentlich bei dem erfindungsgemäßen Verfahren ist, daß die Polymerelektrolyt-Membran jeweils auf einer Seite gestützt wird, wenn die gegenüberliegende Seite mit der Katalysatorschicht beschichtet oder mit ihr in Kontakt gebracht wird. Hiermit ist gemeint, daß die Membran zumindest im Bereich der späteren Elektrode vollflächig mit einem Träger einen wenigstens temporären, festen Verbund bildet. Dieser Träger hat die Aufgabe, ein Verwerfen der Membran während der Beschichtung der gegenüberliegenden Seite mit der Katalysatorschicht weitgehend zu unterdrücken. Er muß deshalb gegenüber den im Verfahren verwendeten Lösungsmitteln beständig sein und darf nur eine geringe Quellung infolge der Lösungsmittel aufweisen. Im Falle eines temporären Trägers kann es sich zum Beispiel um eine Trägerfolie aus Polyester (Dicke der Trägerfolie etwa 50 bis 100 µm) handeln, die die Membran während der Aufbringung der ersten Katalysatorschicht stabilisiert und vor dem Aufbringen der zweiten Katalysatorschicht abgezogen wird. Beim Aufbringen der zweiten Katalysatorschicht kann die Funktion des Trägers von der auf die erste Katalysatorschicht aufgebrachten Gasverteilerschicht übernommen werden. Hierzu ist es erforderlich, daß vor dem Aufbringen der zweiten Katalysatorschicht ein fester Verbund zwischen der Membran, der ersten Katalysatorschicht und der ersten Gasverteilerschicht hergestellt wird.

Zur Durchführung des Verfahrens wird bevorzugt von einer Membran ausgegangen, deren erste Seite frei zugänglich ist und deren zweite Seite durch eine Trägerfolie gestützt wird. Das Verfahren umfaßt in diesem Fall die folgenden Schritte:
a) Herstellen eines Verbundes aus der ersten Katalysatorschicht und der ersten hydrophobierten Gasverteilerschicht mit der ersten Seite der Membran,
b) Entfernen der Stützfolie von der zweiten Seite der Membran,
c) Herstellen eines Verbundes aus der zweiten Katalysatorschicht und der zweiten Gasverteilerschicht mit der zweiten Seite der Membran.

In einer besonderen Ausführungsform des Verfahrens setzt sich Verfahrensschritt a) aus folgenden Unterschritten zusammen:
a1) Beschichten der ersten Seite der Membran mit der ersten Katalysatorschicht unter Verwendung einer ersten Tinte und
a2) Auflegen der ersten Gasverteilerschicht auf die noch feuchte Katalysatorschicht und Trocknen des Verbundes.

In diesem Fall ist es vorteilhaft, wenn eine Tinte für die Herstellung der ersten Katalysatorschicht verwendet wird, die überwiegend organische Lösungsmittel enthält. Die organischen Lösungsmittel bewirken eine stärkere Quellung der Membran als Tinten auf Wasserbasis. Die stärkere Quellung führt wiederum zu einer besseren Verbindung zwischen Membran und Katalysatorschicht. Aus diesem Grund werden im Rahmen dieser Erfindung in allen Verfahrensschritten, die eine Direktbeschichtung der Membran mit Katalysatorschichten vorsehen, Tinten verwendet, die überwiegend organische Lösungsmittel enthalten.

Die Trocknung des Verbundes wird bei einer Temperatur zwischen 50 und 100, bevorzugt bei 70 °C, vorgenommen und führt zu einem festen Verbund zwischen Membran, erster Katalysatorschicht und erster Gasverteilerschicht. Nach dem Trocknen kann der Verbund in einem Wasserbad mit erhöhter Temperatur, bevorzugt bei 80 °C, gewässert werden, um eventuell noch nicht vollständig entfernte Lösungsmittel aus der Katalysatorschicht herauszuwaschen.

Verfahrensschritt c) kann sich analog zu Schritt a) ebenfalls aus zwei Unterschritten zusammensetzen, nämlich:
c1) Beschichten der zweiten Seite der Membran mit der zweiten Katalysatorschicht unter Verwendung einer zweiten Tinte und
c2) Auflegen der zweiten Gasverteilerschicht auf die noch feuchte Katalysatorschicht und Trocknen des Verbundes.

Auch in diesem Fall empfiehlt es sich, eine Tinte für die Herstellung der zweiten Katalysatorschicht zu verwenden, die überwiegend organische Lösungsmittel enthält.

Statt der soeben besprochenen symmetrischen Vorgehensweise bezüglich der Beschichtung der Membran mit Katalysatorschichten kann es in einigen Anwendungsfällen vorteilhafter sein, die zweite Katalysatorschicht nicht direkt auf die Membran aufzubringen, sondern die zweite Katalysatorschicht zuerst auf die zweite Gasverteilerschicht aufzubringen und dann die noch feuchte Katalysatorschicht auf die zweite Seite der Membran aufzulegen. Dementsprechend gestalten sich dann die Verfahrensschritte c3) und c4) dann wie folgt:
c3) Beschichten der zweiten Gasverteilerschicht mit der zweiten Katalysatorschicht unter Verwendung einer zweiten Tinte und
c4) Auflegen der noch feuchten Katalysatorschicht auf die zweite Seite der Membran und Trocknen des Verbundes.

Bei dieser Vorgehensweise ist es vorteilhaft, wenn die Tinte für die Herstellung der zweiten Katalysatorschicht überwiegend Wasser als Lösungsmittel enthält. Dadurch wird verhindert, daß beim Beschichten der hydrophoben Gasverteilerschicht die Tinte in das Porensystem der Gasverteilerschicht eindringt und die Leistung der späteren Brennstoffzelle negativ beeinflußt.

Bei der oben beschriebenen symmetrischen Direktbeschichtung der Membran mit den beiden Katalysatorschichten unter Verwendung von Tinten auf der Basis organischer Lösungsmittel ist es ohne Einfluß auf die Leistung der fertigen Brennstoffzelle, ob zuerst die Katalysatorschicht für die spätere Anode oder für die spätere Kathode zuerst aufgebracht wird. Dagegen wurde bei der unsymmetrischen Verfahrensvariante beobachtet, daß die fertige Brennstoffzelle eine bessere elektrische Leistung zeigt, wenn in Schritt a) des Verfahrens nicht der die Anodenkatalysator sondern der Kathodenkatalysator direkt auf die Polymerelektrolyt-Membran aufgebracht wird. Der Anodenkatalysator wird also in diesem Fall in Schritt c) auf die zweite Gasverteilerschicht aufgebracht.

Bei einer weiteren Verfahrensvariante setzt sich der Verfahrensschritt c) aus den folgenden Unterschritten c5) und c6) zusammen:
c5) Beschichten der zweiten Gasverteilerschicht mit der zweiten Katalysatorschicht unter Verwendung einer zweiten Tinte und Trocknen der Beschichtung und
c6) Auflegen der Katalysatorschicht auf die zweite Seite der Membran und
d) Verpressen des gesamten Verbundes bei erhöhter Temperatur.

Diese Variante ermöglicht es, die zweite Gasverteilerschicht in einem vorgelagerten Arbeitsschritt mit der zweiten Katalysatorschicht zu beschichten und für die spätere Verwendung in dem hier vorgeschlagenen Verfahren zwischenzulagern. Der Verbund mit der Membran wird in diesem Fall durch Anwendung von Druck und Temperatur hergestellt. Der anzuwendende Druck liegt bevorzugt zwischen 1 und 100 bar. Gute Ergebnisse werden mit einem Druck von 70 bar bei einer Temperatur von 130 °C erzielt.

Auch in diesem Fall gelten die schon gemachten Angaben über die Auswahl der Lösungsmittel für die Katalysatortinten und die Reihenfolge der Aufbringung von Anoden- und Kathodenkatalysator.

Die Anwendung von Druck und Temperatur zur Herstellung des Verbundes zwischen der Membran und der mit dem zweiten Katalysator beschichteten zweiten Gasverteilerschicht können unterbleiben, wenn die zweite Katalysatorschicht mit einer Ionomerlösung befeuchtet wird. In diesem Fall ist zur Herstellung des Verbundes nur ein Trokkenschritt bei erhöhter Temperatur erforderlich.

Diese Vorgehensweise kann auf den Fall ausgeweitet werden, daß beide Katalysatorschichten zuerst auf die jeweiligen Gasverteilerschichten aufgebracht werden und daß erst danach der Verbund mit der Membran hergestellt wird. Bei dieser Verfahrensvariante setzen sich daher die Verfahrensschritte a) und c) aus folgenden Unterschritten zusammen:
a3) Beschichten der erste Gasverteilerschicht mit der ersten Katalysatorschicht unter Verwendung einer ersten Tinte und Trocknen der Beschichtung,
a4) Befeuchten der ersten Katalysatorschicht mit einer organischen Ionomerlösung und
a5) Auflegen der befeuchteten ersten Katalysatorschicht auf die erste Seite der Membran und Trocknen des Verbundes,
c7) Beschichten der zweiten Gasverteilerschicht mit der zweiten Katalysatorschicht unter Verwendung einer zweiten Tinte und Trocknen der Beschichtung,
c8) Befeuchten der zweiten Katalysatorschicht mit einer organischen Ionomerlösung und
c9) Auflegen der befeuchteten zweiten Katalysatorschicht auf die zweite Seite der Membran und Trocknen des Verbundes.

Wegen der direkten Beschichtung der hydrophobierten Gasverteilerschichten mit den Katalysatorschichten ist es auch in diesem Fall empfehlenswert, Tinten zu verwenden, die im wesentlichen Wasser als Lösungsmittel enthalten.

Zur Verbesserung der Anbindung der Gasverteilerschichten an die Katalysatorschichten ist es vorteilhaft, wenn die hydrophobierten Gasverteilerschichten auf der für den Kontakt mit den Katalysatorschichten vorgesehenen Fläche mit einer Kohlenstoff enthaltenden, hydrophoben Ausgleichsschicht versehen werden. Zur Anfertigung der Ausgleichsschicht wird eine Paste aus Ruß und PTFE verwendet, die nach dem Aufbringen auf die Gasverteilerschicht getrocknet und calciniert wird. Bei der Calcinierung werden Temperaturen zwischen 340 und 370 °C angewendet, die das PTFE zum Schmelzen bringen.

Außerdem kann es vorteilhaft für den Verbund zwischen den Katalysatorschichten und der Membran sein, wenn die Membran vor dem Aufbringen oder Inkontaktbringen mit den Katalysatorschichten in Wasser oder organischen Lösungsmitteln vorgequollen wird.

Das vorgeschlagene Verfahren eignet sich für die Einzelfertigung von Membran-Elektrodeneinheiten für Brennstoffzellen, wenn die zu verwendenden Elektrolytmembranen Dicken von weniger als 50 µm aufweisen. Die Vorteile des Verfahrens bezüglich der einfachen Herstellung von Membran-Elektrodeneinheiten mit dünnen Membranen wirken sich jedoch dann besonders positiv aus, wenn zu einer kontinuierlichen Fertigungsweise übergegangen wird.

Das vorgeschlagene Verfahren wird im folgenden an Hand der Beispiele und der Figuren näher erläutert. Es zeigen:
- **Figur 1:**: Aufbau einer Membran-Elektrodeneinheit ohne überstehende Membran
- **Figur 2:**: Aufbau einer Membran-Elektrodeneinheit mit überstehender Membran
- **Figur 3:**: Prinzipielle Anordnung für eine kontinuierliche Fertigung von Membran-Elektrodeneinheiten
- **Figur 4:**: Elektrochemische Leistungsdaten von erfindungsgemäß hergestellten Membran-Elektrodeneinheiten

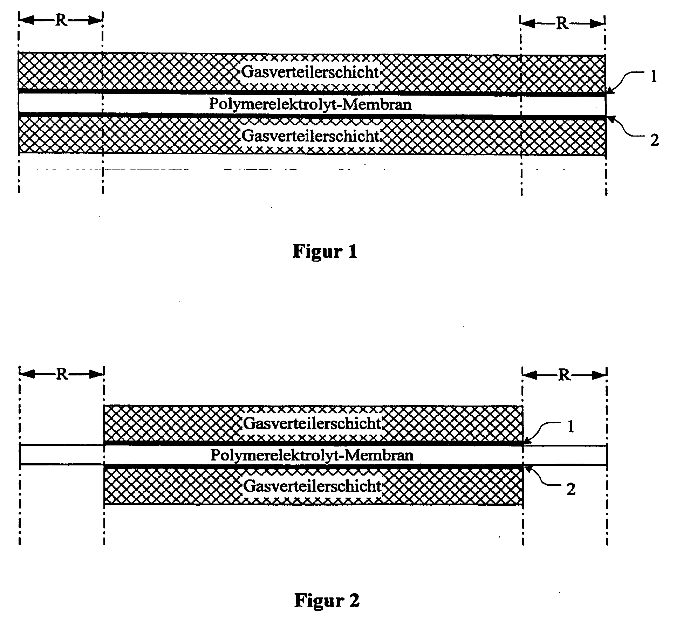

Die Figuren 1 und 2 zeigen zwei verschiedene Ausführungsformen von Membran-Elektrodeneinheiten, die nach dem vorgeschlagenen Verfahren hergestellt werden können. Die Katalysatorschichten sind in den Figuren jeweils mit den Bezugsziffern (1) und (2) gekennzeichnet.

Figur 1 zeigt eine Membran-Elektrodeneinheit, die erhalten wird, wenn die Membran ganzflächig mit Katalysatorschichten und Gasverteilerschichten in Kontakt gebracht wird. Dies kann zum Beispiel in einem einfachen kontinuierlichen Prozeß geschehen. Membran und Gasverteilerschichten werden in diesem Fall als Rollenware eingesetzt und ganzflächig mit den Katalysatorschichten beschichtet und miteinander verbunden. Das hierbei erhaltene, bandförmige Laminat aus Membran, Katalysatorschichten und Gasverteilerschichten wird anschließend auf die gewünschte Größe der Membran-Elektrodeneinheiten zurechtgeschnitten. Vor dem Zusammenbau zu einer Brennstoffzelle muß die Membran-Elektrodeneinheit in einer umlaufenden Randzone, in Figur 1 mit R bezeichnet, durch Imprägnieren mit einem Polymer oder Kleber abgedichtet werden, um das seitliche Austreten von Reaktivgasen zu verhindern.

Figur 2 zeigt eine Membran-Elektrodeneinheit, bei der die Membran größer ist als die aufgebrachten Katalysator- und Gasverteilerschichten und einen umlaufenden Rand bildet, der in Figur 2 ebenfalls mit R bezeichnet ist. Beim Zusammenbau zu einer Brennstoffzelle wird die Membran-Elektrodeneinheit durch Auflegen von Dichtungen auf den Rand R abgedichtet. Zur kontinuierlichen Fertigung der Membran-Elektrodeneinheit gemäß Figur 2 nach dem vorgeschlagenen Verfahren müssen die Katalysatorschichten in der für die Brennstoffzellen benötigten flächigen Ausdehnung auf die bandförmige Membran mittels einer Drucktechnik, wie zum Beispiel Siebdruck, aufgebracht und die Gasverteilerschichten mittels Einzelblattzuführungen paßgenau auf die Katalysatorschichten aufgelegt und der Verbund mit ihnen hergestellt werden.

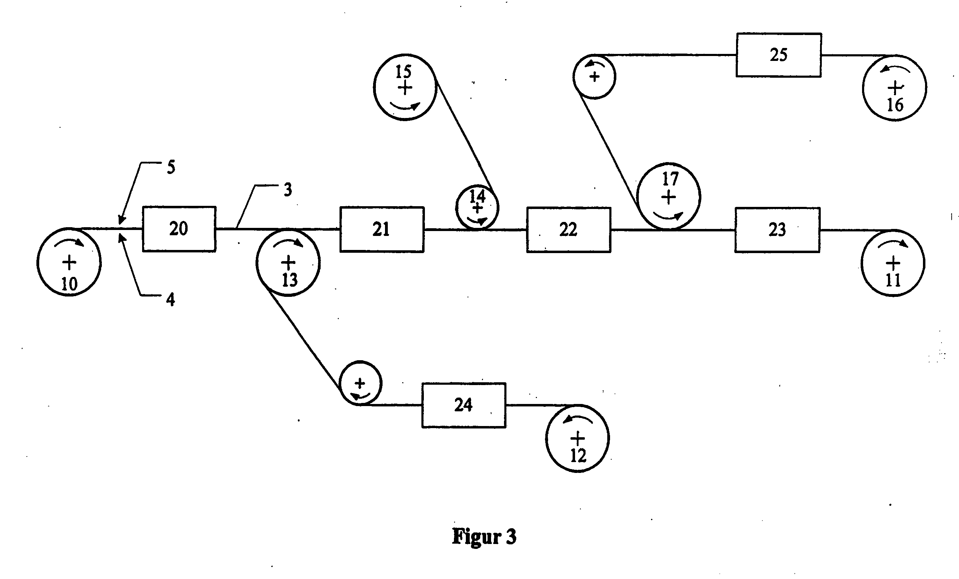

Die Anwendung des vorgeschlagenen Verfahrens auf die kontinuierliche Herstellung von Membran-Elektrodeneinheiten wird an Hand von Figur 3 näher erläutert. Figur 3 zeigt nur eine beispielhafte Konfiguration einer Fertigungsanlage zur kontinuierlichen Herstellung von Membran-Elektrodeneinheiten nach dem durch die Patentansprüche definierten Verfahren. Mit (3) ist in Figur 3 eine mit einer Trägerfolie gestützte, bandförmige Polymerelektrolyt-Membran bezeichnet, die von einer Rolle (10) abgewickelt und nach Fertigstellung der Membran-Elektrodeneinheit auf Rolle (11) aufgewickelt wird. (4) bezeichnet die frei zugängliche erste Seite der Membran, während die zweite Seite (5) durch eine auflaminierte Trägerfolie gestützt wird. Mit (20) bis (25) sind Behandlungsstationen bezeichnet, in denen abhängig von der zu realisierenden Verfahrensvariante unterschiedliche Behandlungen vorgenommen werden.

In einer möglichen Ausführungsform des Verfahrens wird die geträgerte Membran in der Behandlungsstation (20) zunächst in einem Wässerungsbad vorgequollen und danach auf der frei zugänglichen ersten Seite (4) ganzflächig mit der ersten Katalysatorschicht beschichtet. Die Membran ist während dieser Beschichtung durch die Trägerfolie auf der zweiten Seite der Membran gestützt. Die erste Gasverteilerschicht wird als Bandware von der Rolle (12) abgewickelt und mit Hilfe der Umlenkwalze (13) auf die noch feuchte Katalysatorschicht aufgelegt. In der Behandlungsstation (21) wird die Katalysatorschicht bei einer Temperatur von etwa 70 °C getrocknet und damit der Verbund zwischen der ersten Seite der Membran, der ersten Katalysatorschicht und der ersten Gasverteilerschicht hergestellt.

Je nach gewünschter Fertigungstiefe des Verfahrens kann die Gasverteilerschicht in der Behandlungsstation (24) hydrophobiert und gegebenenfalls mit einer Ausgleichsschicht versehen oder fertig konfektioniert mit Hydrophobierung und gegebenenfalls Ausgleichsschicht als Rollenware dem Verfahren von Rolle (12) zugeführt werden.

Nach Herstellen des Verbundes zwischen Membran, erster Katalysatorschicht und erster Gasverteilerschicht ist die Membran auch auf der ersten Seite gestützt. Daher kann jetzt die Trägerfolie von der zweiten Seite der Membran mittels Umlenkwalze (14) von der Membran abgezogen und auf Rolle (15) aufgewickelt werden. Danach erfolgt in Behandlungsstation (22) die Aufbringung der zweiten Katalysatorschicht auf die zweite Seite der Membran. Während dieser Beschichtung wird die Membran auf der ersten Seite durch den schon hergestellten Verbund mit der ersten Gasverteilerschicht gestützt. Durch Umlenkwalze (17) wird dann die zweite Gasverteilerschicht auf die noch feuchte zweite Katalysatorschicht aufgelegt. Durch Trocknen der zweiten Katalysatorschicht bei etwa 70 °C in der Behandlungsstation (23) wird der Verbund zwischen Membran, zweiter Katalysatorschicht und zweiter Gasverteilerschicht hergestellt.

Die zweite Gasverteilerschicht wird in Bandform von Rolle (16) abgewickelt. Wie im Falle der ersten Gasverteilerschicht kann die zweite Gasverteilerschicht vorkonfektioniert von Rolle (16) abgewickelt werden oder erst aus einem bandförmigen Kohlefaserpapier oder Kohlefasergewebe durch Hydrophobieren und gegebenenfalls Beschichten mit einer Ausgleichsschicht in Behandlungsstation (25) hergestellt werden.

Die Fertigungsanlage von Figur 3 erlaubt im Rahmen der Patentansprüche vielfältige Abwandlungen der soeben beschriebenen Vorgehensweise. So ist es nicht erforderlich, auch die zweite Katalysatorschicht direkt auf die zweite Seite Membran aufzubringen. Vielmehr kann gemäß Anspruch 7 die zweite Katalysatorschicht auf die Gasverteilerschicht aufgedruckt und dann im noch feuchten Zustand mit der Membran in Kontakt gebracht werden. In diesem Fall beinhaltet die Behandlungsstation (25) für die Gasverteilerschicht auch das Aufbringen der zweiten Katalysatorschicht auf die Gasverteilerschicht.

Ebenso können beide Gasverteilerschichten in einem vorgelagerten Fertigungsschritt mit den jeweiligen Katalysatorschichten beschichtet und getrocknet werden. Diese katalysierten Gasverteilerschichten werden der Fertigungsanlage von Figur 3 als Rollenware (Rollen (12) und (16)) zugeführt. In den Behandlungsstationen (24) und (25) werden die Katalysatorschichten mit einer organischen Ionomerlösung befeuchtet und anschließend mittels der Walzen (13) und (17) auf die Membran aufgelegt. Die Behandlungsstationen (21) und (23) enthalten dann nur Trocknungsstationen. Behandlungsstation (22) kann entfallen und Behandlungsstation (20) enthält in diesem Fall nur ein Wässerungsbad zum Vorquellen der Membran.

Sollen mit der Fertigungsanlage von Figur 3 Membran-Elektrodeneinheiten gemäß Figur 2 hergestellt werden, so werden die Katalysatorschichten in den gewünschten Mustern auf die Membran aufgebracht. Die Zurührung der Gasverteilerschichten mit Hilfe der Elemente (12), (13) und (24) einerseits und der Elemente (16), (17) und (25) andererseits wird durch geeignete Einzelblattzuführungen von bereits zugeschnittenen Gasverteilerschichten ersetzt, die paßgenau auf die Katalysatorschichten aufgelegt werden.

Alternativ hierzu können schon mit Katalysator beschichtete und zugeschnittene Gasverteilerschichten verwendet werden, die vor dem Auflegen auf die Membran mit einer organischen Lösung eines Ionomers befeuchtet werden, damit sich nach dem Trocken der Ionomerlösung ein fester Verbund zwischen der Membran und den katalysierten Gasverteilerschichten einstellt.

Das folgende Beispiel soll das erfindungsgemäße Verfahren weiter erläutern.

### Beispiel 1:

Für die Anfertigung einer Membran-Elektrodeneinheit gemäß dem vorgeschlagenen Verfahren wurden Katalysatortinten mit den folgenden Zusammensetzungen hergestellt:

| **Zusammensetzung der Kathodentinte:** | |
|---|---|
| 13, 0 g | Pt-Trägerkatalysator (40 Gew.-% Pt auf Ruß, Fa. Dmc²) |
| 41,0 g | Nafion®-Lösung (10 Gew.-% in Wasser) |
| 36,0 g | Wasser (vollentsalzt) |
| 10,0 g | Dipropylenglykol |
| 100,0 g | |

| **Zusammensetzung der Anodentinte:** | |
|---|---|
| 11, 0 g | PtRu-Trägerkatalysator (40 Gew.-% PtRu auf Ruß: 26,4 Gew.-% Pt, 13,6 Gew.-% Ru; Katalysator entsprechend US 6,007,934) |
| 36,0 g | Nafion®-Lösung (10 Gew.-% in Dipropylenglykol (PG)) |
| 11 g | Wasser (vollentsalzt) |
| 42,0 g | Dipropylenglykol |
| 100,0 g | |

Die obige Kathodentinte enthielt als Lösungsmittel überwiegend Wasser, während die Anodentinte im wesentlichen Dipropylenglykol als Lösungsmittel enthielt.

Die Nafion-Lösung (Nafion: Tetrafluorethylen-Fluorvinylether-Copolymer mit Sulfonsäuregruppen in der Protonenform) in Dipropylenglykol wurde aus einer käuflichen Nafion-Lösung in niedrig siedenden Alkoholen (von DuPont), Abdestillieren der Alkohole und Lösen des Nafions in Dipropylenglykol hergestellt. In dieser Lösung wurde der Katalysator suspendiert.

Eine 30 µm dicke Polymerelektrolyt-Membran, die auf einer Seite durch eine auflaminierte Folie aus Polyester gestützt war, wurde zunächst auf der frei zugänglichen Seite mit der Anodentinte beschichtet. Auf die noch feuchte Anodenschicht wurde ein hydrophobiertes Kohlefaserpapier (Toray TGPH-060; Dicke 200µm) aufgelegt. Danach wurde der Verbund zwischen Membran, Anodenschicht und Gasverteilerschicht durch eine zweistufige Trocknung bei 70 und 90 °C hergestellt. Abschließend wurde der Verbund in 80 °C heißem Wasser gewässert. Die Platinbeladung der fertigen Anodenschicht betrug 0,21 mg Pt/cm².

In einem separaten Arbeitsvorgang wurde eine zweite Gasverteilerschicht (hydrophobiertes Kohlefaserpapier; Toray TGPH-060) mit der Kathodentinte beschichtet und in zwei Stufen bei 70 und 90 °C getrocknet. Anschließend wurde die Kathodenschicht auf die zweite Seite der Membran nach Entfernen der Trägerfolie aufgelegt und der Verbund durch Heißpressen bei 130 °C und einem Druck von 70 bar hergestellt. Die Kathodenschicht wies eine Platinbeladung von 0,37 mg/cm² auf.

### Beispiel 2:

In diesem Beispiel wurde die Kathodentinte im wesentlichen mit organischen Lösungsmitteln (Dipropylenglykol) und die Anodentinte im wesentlichen mit Wasser zubereitet. Die Zusammensetzung der Tinten ist der folgenden Aufstellung zu entnehmen:

| **Zusammensetzung der Kathodentinte:** | |
|---|---|
| 11, 0 g | Pt-Trägerkatalysator (40 Gew.-% Pt auf Ruß, Fa. Degussa-Hüls) |
| 36,0 g | Nafion®-Lösung (10 Gew.-% in Dipropylenglykol (PG) |
| 11 g | Wasser (vollentsalzt) |
| 42,0 g | Dipropylenglykol |
| 100,0 g | |

| **Zusammensetzung der Anodentinte:** | |
|---|---|
| 11, 0 g | PtRu-Trägerkatalysator (40 Gew.-% PtRu auf Ruß: 26,4 Gew.-% Pt, 13,6 Gew.-% Ru; Katalysator entsprechend US 6,007,934) |
| 41,0 g | Nafion®-Lösung (10 Gew.-% in Wasser) |
| 36,0 g | Wasser (vollentsalzt) |
| 10,0 g | Dipropylenglykol |
| 100,0 g | |

Eine 30 µm dicke Polymerelektrolyt-Membran, die auf einer Seite durch eine auflaminierte Folie aus Polyester gestützt war, wurde zunächst auf der frei zugänglichen Seite mit der Kathodentinte beschichtet. Auf die noch feuchte Kathodenschicht wurde ein hydrophobiertes Kohlefaserpapier (Toray TGPH-060) aufgelegt. Danach wurde der Verbund zwischen Membran, Kathodenschicht und Gasverteilerschicht durch eine zweistufige Trocknung bei 70 und 90 °C hergestellt. Abschließend wurde der Verbund in 80 °C heißem Wasser gewässert. Die Platinbeladung der fertigen Kathodenschicht betrug 0,26 mg Pt/cm².

In einem separaten Arbeitsvorgang wurde eine zweite Gasverteilerschicht (hydrophobiertes Kohlefaserpapier Toray TGPH-060) mit der Anodentinte beschichtet und in zwei Stufen bei 70 und 90 °C getrocknet. Anschließend wurde die Anodenschicht auf die zweite Seite der Membran nach Entfernen der Trägerfolie aufgelegt und der Verbund durch Heißpressen bei 130 °C und einem Druck von 70 bar hergestellt. Die Anodenschicht wies eine Platinbeladung von 0,26 mg/cm² auf.

### Elektrochemische Prüfungen

Die nach Beispiel 1 und Beispiel 2 hergestellten Membran-Elektrodeneinheiten wurden in eine PEM-Brennstoffzellen-Prüfzelle mit einer aktiven Zellenfläche von 50 cm² eingebaut.

Bei den Leistungstests wurde als Anodengas eine Gasmischung von 45% H₂, 31% N₂, 21% CO₂, 50 ppm CO mit einem Airbleed von 3% Luft eingesetzt. Als Kathodengas wurde Luft verwendet. Die Zelltemperatur betrug 70 °C. Die Anodenbefeuchtung wurde bei 85 °C und die Kathodenbefeuchtung bei 55 °C vorgenommen. Der Druck der Arbeitsgase betrug 1 bar (absolut). Die Stöchiometrie der Gase war 1,1 (Anodengas) und 2,0 (Kathodengas).

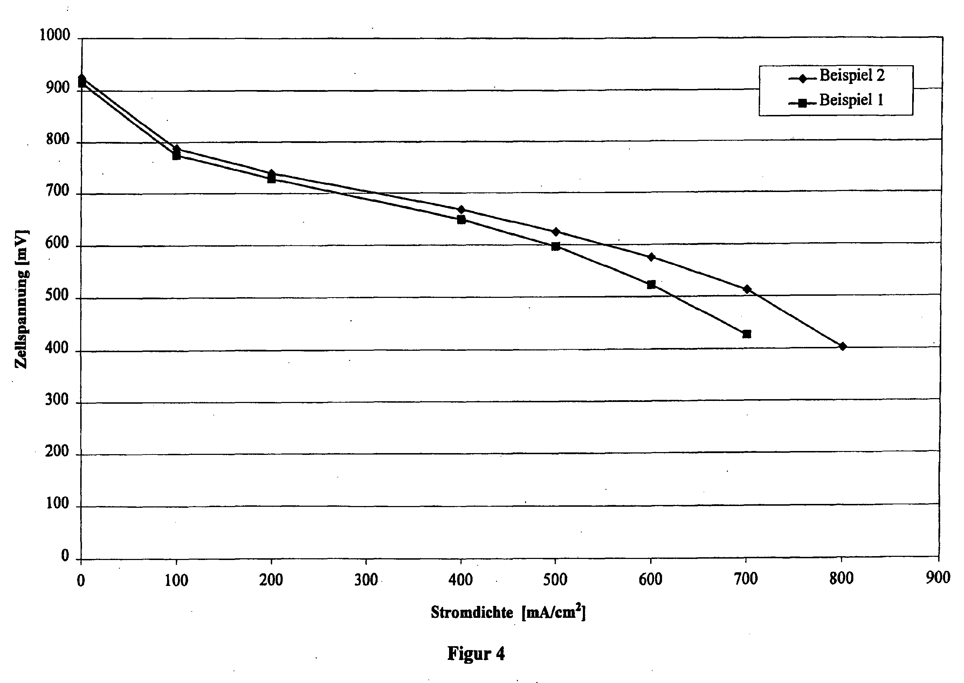

Die gemessenen Zellspannungen im Luftbetrieb in Abhängigkeit von der Stromdichte sind in Figur 4 dargestellt. Es ist klar ersichtlich, daß im Falle der Direktbeschichtung der Polymermembran auf der Kathodenseite (Beispiel 2) die Leistungsdaten der Zelle über den gesamten Stromdichtebereich besser sind als im Falle der Direktbeschichtung auf der Anodenseite (Beispiel 1). Dieser Effekt ist um so mehr beeindruckend, als das die Edelmetallbeladung der Katalysatortinte von Beispiel 2 geringer ist, als die in Beispiel 1. Durch das Lösungsmittel der Katalysatortinte kommt es bei der Direktbeschichtung auf die Polymermembran zu einer Vorquellung der Polymermembran die wiederum in einer verbesserten Umhüllung bzw. Kontaktierung der angrenzenden Katalysatorpartikel resultiert. Wegen der größeren Leistungsverluste einer mit Wasserstoff betriebenen Brennstoffzelle durch Überspannungspotentiale an der Kathode ist der Einfluß einer verbesserten Anbindung zwischen Katalysator und Membran auf die Zellenleistung beim Kathodenkatalysator größer als beim Anodenkatalysator.

## Patentansprüche

1. Verfahren zur Herstellung einer Membran-Elektrodeneinheit für Brennstoffzellen enthaltend eine Polymerelektrolyt-Membran, welche auf einer ersten Seite mit einer ersten Katalysatorschicht und einer ersten hydrophobierten Gasverteilerschicht und auf der zweiten Seite mit einer zweiten Katalysatorschicht und einer zweiten hydrophobierten Gasverteilerschicht einen festen Verbund bildet, wobei für die Herstellung der Katalysatorschichten Tinten eingesetzt werden, die den jeweiligen Elektrokatalysator, ein oder mehrere Lösungsmittel, ein Protonen leitendes Ionomer und gegebenenfalls Hydrophobierungsmittel und Porenbildner enthalten,
**dadurch gekennzeichnet,**
**daß** die beiden Katalysatorschichten nacheinander auf die Pölymerelektrolyt-Membran aufgebracht oder mit ihr in Kontakt gebracht werden, wobei während des Aufbringens oder Inkontaktbringens die jeweils gegenüberliegende Seite der Membran mit einem Träger einen wenigstens temporären, festen Verbund bildet und so gestützt wird, und
**daß** Polymerelektrolyt-Membran und Gasverteilerschichten in Form von Rollenware eingesetzt werden und der gesamte Verfahrensablauf kontinuierlich vorgenommen wird.

2. Verfahren nach Anspruch 1,
**dadurch gekennzeichnet,**
**daß** eine Polymerelektrolyt-Membran eingesetzt wird, deren erste Seite frei zugänglich ist und deren zweite Seite durch eine Trägerfolie gestützt wird und wobei das Verfahren die folgenden Schritte umfaßt:
a) Herstellen eines Verbundes aus der ersten Katalysatorschicht und der ersten hydrophobierten Gasverteilerschicht mit der ersten Seite der Membran,
b) Entfernen der Trägerfolie von der zweiten Seite der Membran,
c) Herstellen eines Verbundes aus der zweiten Katalysatorschicht und der zweiten Gasverteilerschicht mit der zweiten Seite der Membran.

3. Verfahren nach Anspruch 2,
**dadurch gekennzeichnet,**
**daß** Verfahrensschritt a) sich aus folgenden Unterschritten zusammensetzt:
a1) Beschichten der ersten Seite der Membran mit der ersten Katalysatorschicht unter Verwendung einer ersten Tinte und
a2) Auflegen der ersten Gasverteilerschicht auf die noch feuchte Katalysatorschicht und Trocknen des Verbundes.

4. Verfahren nach Anspruch 3,
**dadurch gekennzeichnet,**
**daß** die Tinte für die Herstellung der ersten Katalysatorschicht überwiegend organische Lösungsmittel enthält.

5. Verfahren nach Anspruch 4,
**dadurch gekennzeichnet,**
**daß** Verfahrensschritt c) sich aus folgenden Unterschritten zusammensetzt:
c1) Beschichten der zweiten Seite der Membran mit der zweiten Katalysatorschicht unter Verwendung einer zweiten Tinte und
c2) Auflegen der zweiten Gasverteilerschicht auf die noch feuchte Katalysatorschicht und Trocknen des Verbundes.

6. Verfahren nach Anspruch 5,
**dadurch gekennzeichnet,**
**daß** die Tinte für die Herstellung der zweiten Katalysatorschicht überwiegend organische Lösungsmittel enthält.

7. Verfahren nach Anspruch 4,
**dadurch gekennzeichnet,**
**daß** Verfahrensschritt c) sich aus folgenden Unterschritten zusammensetzt:
c3) Beschichten der zweiten Gasverteilerschicht mit der zweiten Katalysatorschicht unter Verwendung einer zweiten Tinte und
c4) Auflegen der noch feuchten Katalysatorschicht auf die zweite Seite der Membran und Trocknen des Verbundes.

8. Verfahren nach Anspruch 7,
**dadurch gekennzeichnet,**
**daß** die Tinte für die Herstellung der zweiten Katalysatorschicht überwiegend Wasser als Lösungsmittel enthält.

9. Verfahren nach Anspruch 8,
**dadurch gekennzeichnet,**
**daß** die erste Katalysatorschicht die Kathode und die zweite Katalysatorschicht die Anode der Membran-Elektrodeneinheit bildet.

10. Verfahren nach Anspruch 4,
**dadurch gekennzeichnet,**
**daß** Verfahrensschritt c) sich aus folgenden Unterschritten zusammensetzt:
c5) Beschichten der zweiten Gasverteilerschicht mit der zweiten Katalysatorschicht unter Verwendung einer zweiten Tinte und Trocknen der Beschichtung und
c6) Auflegen der Katalysatorschicht auf die zweite Seite der Membran und
d) Verpressen des gesamten Verbundes bei erhöhter Temperatur.

11. Verfahren nach Anspruch 10,
**dadurch gekennzeichnet,**
**daß** die Tinte für die Herstellung der zweiten Katalysatorschicht überwiegend Wasser als Lösungsmittel enthält.

12. Verfahren nach Anspruch 11,
**dadurch gekennzeichnet,**
**daß** die erste Katalysatorschicht die Kathode und die zweite Katalysatorschicht die Anode der Membran-Elektrodeneinheit bildet.

13. Verfahren nach Anspruch 2,
**dadurch gekennzeichnet,**
**daß** die Verfahrensschritte a) und c) sich aus folgenden Unterschritten zusammensetzen:
a3) Beschichten der ersten Gasverteilerschicht mit der ersten Katalysatorschicht unter Verwendung einer ersten Tinte und Trocknen der Beschichtung,
a4) Befeuchten der ersten Katalysatorschicht mit einer organischen Ionomerlösung und
a5) Auflegen der befeuchteten ersten Katalysatorschicht auf die erste Seite der Membran und Trocknen des Verbundes,
c7) Beschichten der zweiten Gasverteilerschicht mit der zweiten Katalysatorschicht unter Verwendung einer zweiten Tinte und Trocknen der Beschichtung,
c8) Befeuchten der zweiten Katalysatorschicht mit einer organischen Ionomerlösung und
c9) Auflegen der befeuchteten zweiten Katalysatorschicht auf die zweite Seite der Membran und Trocknen des Verbundes.

14. Verfahren nach Anspruch 13,
**dadurch gekennzeichnet,**
**daß** die Tinten für die Herstellung der Katalysatorschichten überwiegend Wasser als Lösungsmittel enthalten.

15. Verfahren nach einem der Ansprüche 1 bis 14,
**dadurch gekennzeichnet,**
**daß** die Gasverteilerschichten vor dem Kontakt mit den jeweiligen Katalysatorschichten mit einer Kohlenstoff enthaltenden, hydrophoben Ausgleichsschicht beschichtet werden.

16. Verfahren nach Anspruch 15,
**dadurch gekennzeichnet,**
**daß** die Katalysatorschichten nach dem Trocknen bei erhöhter Temperatur gewässert werden.

17. Verfahren nach einem der Ansprüche 1 bis 14,
**dadurch gekennzeichnet,**
**daß** die Katalysatorschichten nach dem Trocknen bei erhöhter Temperatur gewässert werden.

18. Verfahren nach Anspruch 1,
**dadurch gekennzeichnet,**
**daß** die Katalysatorschichten durch Sprühen, Pinseln oder Drucken auf Polymerelektrolyt-Membran und Gasverteilerschichten aufgebracht werden.

19. Verfahren nach Anspruch 1,
**dadurch gekennzeichnet,**
**daß** die Katalysatorschichten in der für die Brennstoffzellen benötigten flächigen Ausdehnung auf die bandförmige Polymerelektrolyt-Membran mittels Siebdruck aufgebracht und die Gasverteilerschichten mittels Einzelblattzuführungen paßgenau auf die Katalysatorschichten aufgelegt werden.

20. Verfahren nach Anspruch 1,
**dadurch gekennzeichnet,**
**daß** die Polymerelektrolyt-Membran vor dem Aufbringen oder Inkontaktbringen mit den Katalysatorschichten in Wasser oder organischen Lösungsmitteln vorgequollen wird.

## Claims

1. A method for producing a membrane electrode assembly for fuel cells containing a polymer electrolyte membrane forming a firm composite with a first catalyst layer and a first water-repellent gas distribution layer on a first side and with a second catalyst layer and a second water-repellent gas distribution layer on the second side, wherein for producing the catalyst layers inks are used containing the respective electrocatalyst, one or more solvents, a proton-conducting ionomer and optionally hydrophobic agents and pore-forming agents,
**characterized in that**
the two catalyst layers are successively applied to or brought into contact with the polymer electrolyte membrane, wherein during the application or contacting process, the respective opposite surface of the membrane forms an at least temporary, firm composite and is thus supported, and
that the polymer electrolyte membrane and gas distribution layers are used in form of reel material and the entire process takes place continuously.

2. The method according to claim 1,
**characterized in that**
a polymer electrolyte membrane is used, the first surface of which is readily accessible and the second surface of which is supported by a backing film and wherein the method comprises the following steps:
a) producing a composite of the first catalyst layer and the first water-repellent gas distribution layer with the first surface of the membrane,
b) removing the backing film from the second surface of the membrane,
c) producing a composite of the second catalyst layer and the second gas distribution layer with the second surface of the membrane.

3. The method according to claim 2,
**characterized in that**
method step a) comprises the following sub-steps :
a1) coating the first surface of the membrane with the first catalyst layer using a first ink and
a2) laying the first gas distribution layer on the still moist catalyst layer and drying the composite.

4. The method according to claim 3,
**characterized in that**
the ink for producing the first catalyst layer contains predominantly organic solvents.

5. The method according to claim 4,
**characterized in that**
method step c) comprises the following sub-steps:
c1) coating the second surface of the membrane with the second catalyst layer using a second ink and
c2) laying the second gas distribution layer on the still moist catalyst layer and drying the composite.

6. The method according to claim 5,
**characterized in that**
the ink for producing the second catalyst layer contains predominantly organic solvents.

7. The method according to claim 4,
**characterized in that**
method step c) comprises the following sub-steps:
c3) coating the second gas distribution layer with the second catalyst layer using a second ink and
c4) laying the still moist catalyst layer on the second surface of the membrane and drying the composite.

8. The method according to claim 7,
**characterized in that**
the ink for producing the second catalyst layer contains predominantly water as solvent.

9. The method according to claim 8,
**characterized in that**
the first catalyst layer forms the cathode and the second catalyst layer forms the anode in the membrane electrode assembly.

10. The method according to claim 4,
**characterized in that**
method step c) comprises the following sub-steps:
c5) coating the second gas distribution layer with the second catalyst layer using a second ink and drying the coating and
c6) laying the catalyst layer on the second surface of the membrane and
d) compressing the entire composite at elevated temperature.

11. The method according to claim 10,
**characterized in that**
the ink for producing the second catalyst layer contains predominantly water as solvent.

12. The method according to claim 11,
**characterized in that**
the first catalyst layer forms the cathode and the second catalyst layer forms the anode in the membrane electrode assembly.

13. The method according to claim 2,
**characterized in that**
the method steps a) and c) comprise the following sub-steps:
a3) coating the first gas distribution layer with the first catalyst layer using a first ink and drying the coating,
a4) moistening the first catalyst layer with an organic ionomer solution and
a5) laying the moistened first catalyst layer on the first surface of the membrane and drying the composite,
c7) coating the second gas distribution layer with the second catalyst layer using a second ink and drying the coating,
c8) moistening the second catalyst layer with an organic ionomer solution and
c9) laying the moistened second catalyst layer on the second surface of the membrane and drying the composite.

14. The method according to claim 13,
**characterized in that**
the inks for producing the catalyst layers contain predominantly water as solvent.

15. The method according to any of claims 1 to 14,
**characterized in that**
the gas distribution layers are coated with a carbon-containing, hydrophobic compensation layer before making contact with the respective catalyst layers.

16. The method according to claim 15,
**characterized in that**
the catalyst layers are washed at elevated temperature after drying.

17. The method according to any of claims 1 to 14,
**characterized in that**
the catalyst layers are washed at elevated temperature after drying.

18. The method according to claim 1,
**characterized in that**
the catalyst layers are applied to the polymer electrolyte membrane and gas distribution layers by spraying, brushing or printing.

19. The method according to claim 1,
**characterized in that**
the catalyst layers are applied to the strip-shaped polymer electrode membrane in the planar dimensions required for fuel cells by means of screen printing and said gas distribution layers are laid precisely on the catalyst layers using sheet feeders.

20. The method according to claim 1,
**characterized in that**
the polymer electrolyte membrane is preswollen in water or organic solvents before application of or making contact with the catalyst layers.

## Revendications

1. Procédé de fabrication d'une unité membrane-électrode pour piles à combustible contenant une membrane en électrolyte polymère, laquelle forme une liaison solide avec une première couche catalytique et une première couche de diffusion gazeuse hydrophobisée sur une première face, et avec une deuxième couche catalytique et une deuxième couche de diffusion gazeuse hydrophobisée sur la deuxième face, des encres étant utilisées pour la fabrication des couches catalytiques, lesquelles contiennent l'électrocatalyseur correspondant, un ou plusieurs solvants, un ionomère conducteur de protons et le cas échéant des agents hydrophobisants et porogènes,
**caractérisé**
**en ce que** les deux couches catalytiques sont appliquées l'une après l'autre sur la membrane en électrolyte polymère ou mises en contact avec celle-ci, la face opposée de la membrane formant une liaison solide au moins temporaire avec un support et étant ainsi soutenue pendant l'application ou la mise en contact, et
**en ce que** la membrane en électrolyte polymère et les couches de diffusion gazeuse sont mises en oeuvre sous forme de rouleau et en ce que le procédé est globalement exécuté de manière continue.

2. Procédé selon la revendication 1,
**caractérisé en ce qu'**une membrane en électrolyte polymère est utilisée, dont la première face est librement accessible et la deuxième face est soutenue par un film support, ledit procédé comprenant les étapes suivantes :
a) fabrication d'un corps composite à partir de la première couche catalytique et de la première couche hydrophobisée de diffusion gazeuse avec la première face de la membrane,
b) retrait du film support de la deuxième face de la membrane,
c) fabrication d'un corps composite à partir de la deuxième couche catalytique et de la deuxième couche de diffusion gazeuse avec la deuxième face de la membrane.

3. Procédé selon la revendication 2,
**caractérisé en ce que** l'étape de procédé a) comprend les sous-étapes suivantes :
a1) revêtement de la première face de la membrane avec la première couche catalytique en recourant à une première encre, et
a2) application de la première couche de diffusion gazeuse sur la couche catalytique encore humide et séchage du corps composite.

4. Procédé selon la revendication 3,
**caractérisé en ce que** l'encre pour la fabrication de la première couche catalytique contient majoritairement des solvants organiques.

5. Procédé selon la revendication 4,
**caractérisé en ce que** l'étape de procédé c) comprend les sous-étapes suivantes :
c1) revêtement de la deuxième face de la membrane avec la deuxième couche catalytique en recourant à une deuxième encre et
c2) application de la deuxième couche de diffusion gazeuse sur la couche catalytique encore humide et séchage du corps composite.

6. Procédé selon la revendication 5,
**caractérisé en ce que** l'encre pour la fabrication de la deuxième couche catalytique contient majoritairement des solvants organiques.

7. Procédé selon la revendication 4,
**caractérisé en ce que** l'étape de procédé c) comprend les sous-étapes suivantes :
c3) revêtement de la deuxième couche de diffusion gazeuse avec la deuxième couche catalytique en recourant à une deuxième encre, et
c4) application de la couche catalytique encore humide sur la deuxième face de la membrane et séchage du corps composite.

8. Procédé selon la revendication 7,
**caractérisé en ce que** l'encre pour la fabrication de la deuxième couche catalytique contient majoritairement de l'eau comme solvant.

9. Procédé selon la revendication 8,
**caractérisé en ce que** la première couche catalytique forme la cathode et la deuxième couche catalytique l'anode de l'unité membrane-électrode.

10. Procédé selon la revendication 4,
**caractérisé en ce que** l'étape de procédé c) comprend les sous-étapes suivantes :
c5) revêtement de la deuxième couche de diffusion gazeuse avec la deuxième couche catalytique en recourant à une deuxième encre et séchage du revêtement, et
c6) application de la couche catalytique sur la deuxième face de la membrane, et
d) compression de l'ensemble du corps composite à température élevée.

11. Procédé selon la revendication 10,
**caractérisé en ce que** l'encre pour la fabrication de la deuxième couche catalytique contient majoritairement de l'eau comme solvant.

12. Procédé selon la revendication 11,
**caractérisé en ce que** la première couche catalytique forme la cathode et la deuxième couche catalytique l'anode de l'unité membrane-électrode.

13. Procédé selon la revendication 2,
**caractérisé en ce que** les étapes de procédé a) et c) comprennent les sous-étapes suivantes :
a3) revêtement de la première couche de diffusion gazeuse avec la première couche catalytique en recourant à une première encre et séchage du revêtement,
a4) humidification de la première couche catalytique avec une solution d'ionomère organique, et
a5) application de la première couche catalytique humidifiée sur la première face de la membrane et séchage du corps composite,
c7) revêtement de la deuxième couche de diffusion gazeuse avec la deuxième couche catalytique en recourant à une deuxième encre et séchage du revêtement,
c8) humidification de la deuxième couche catalytique avec une solution d'ionomère organique, et
c9) application de la deuxième couche catalytique humidifiée sur la deuxième face de la membrane et séchage du corps composite.

14. Procédé selon la revendication 13,
**caractérisé en ce que** les encres pour la fabrication des couches catalytiques contiennent majoritairement de l'eau comme solvant.

15. Procédé selon l'une des revendications 1 à 14,
**caractérisé en ce qu'**avant contact avec les couches catalytiques, les couches de diffusion gazeuse sont revêtues d'une couche d'égalisation hydrophobe contenant du carbone.

16. Procédé selon la revendication 15,
**caractérisé en ce que** les couches catalytiques sont trempées après séchage à température élevée.

17. Procédé selon l'une des revendications 1 à 14,
**caractérisé en ce que** les couches catalytiques sont trempées après séchage à température élevée.

18. Procédé selon la revendication 1,
**caractérisé en ce que** les couches catalytiques sont appliquées par pulvérisation, application au pinceau ou impression sur la membrane en électrolyte polymère et les couches de diffusion gazeuse.

19. Procédé selon la revendication 1,
**caractérisé en ce que** les couches catalytiques sont appliquées dans l'étendue exigée pour les piles à combustible, à plat par impression sérigraphique sur la membrane en électrolyte polymère en forme de bande, et **en ce que** les couches de diffusion gazeuse sont appliquées de manière précisément ajustée feuille par feuille sur les couches catalytiques.

20. Procédé selon la revendication 1,
**caractérisé en ce que** la membrane en électrolyte polymère est trempée dans l'eau ou des solvants organiques avant application ou mise en contact avec les couches catalytiques.
